Europäisches Patentamt

European Patent Office

Office européen des brevets

(11) Publication number: **0 484 864 A2**

## EUROPEAN PATENT APPLICATION

(21) Application number: **91118791.2**

(22) Date of filing: **04.11.91**

(51) Int. Cl.5: **G01N 27/447**, G01N 27/26

(30) Priority: **05.11.90 JP 297058/90**
**22.10.91 JP 273856/91**

(43) Date of publication of application:
**13.05.92 Bulletin 92/20**

(84) Designated Contracting States:
**DE ES FR GB IT**

(71) Applicant: **HELENA LABORATORIES CO., LTD.**
**9-21-19, Tokiwa**
**Urawa-shi, Saitama 336(JP)**

(72) Inventor: **Nakazato, Tokiya, c/o Helena Lab.**
**Co., Ltd.**
**9-21-19, Tokiwa Urawa-shi**
**Saitama 336(JP)**

(74) Representative: **Blumbach Weser Bergen**
**Kramer Zwirner Hoffmann Patentanwälte**
**Radeckestrasse 43**
**W-8000 München 60(DE)**

(54) **Method for supplying reagent for electrophoresis and thin layer reagent supplier for electrophoresis.**

(57) A reagent content is set such as to be dissolved with a water content in a support member (10) having a sample after electrophoresed, and such amount of the reagent is formed into a thin layer (11) by using a binder, and the thin layer (11) thus prepared is closely attached to the support member (10) so that a proper amount of the reagent diffuses and is dissolved into the sample on the support member (10) at an instant.

FIG.6

Rank Xerox (UK) Business Services
(-/2.18/2.0)

The present invention relates to an electrophoresis thin layer reagent supplier for supplying a reagent to support member properly for use in an electrophoresis process for biochemical inspections and studies in which analysis samples such as serum protein, isoenzyme, lipoprotein or the like are developed over support members made of materials including a cellulose acetate film, agarose, agar, polyacrylamide gel or the like and the analysis samples thus developed over the support members are reacted with reagents, and resultant substances are assayed.

In conventional electrophoresis processes, reagents are supplied onto support members by performing mainly two ways of procedures as described below.

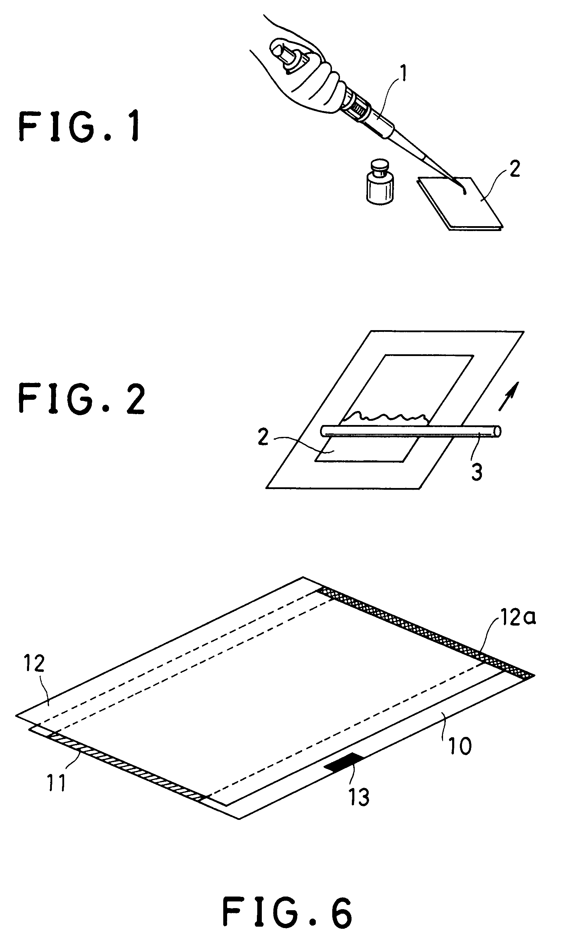

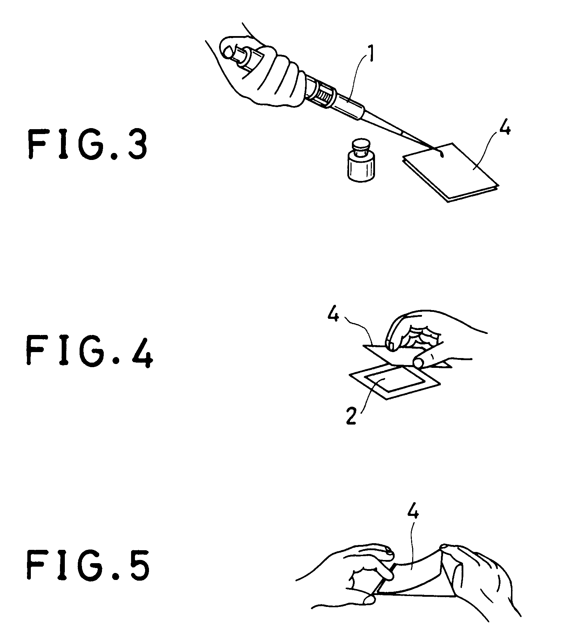

A first procedure comprises the steps of dropping a reagent dissolved before it is used onto the entire surface of a support member 2 which has been electrophoresed, using for example, a pipet, as shown in Fig. 1; having the support member 2 absorb the reagent for a fixed length of time; and subsequently, removing the excessive reagent using a glass bar 3 or the like as shown in Fig. 2.

A second procedure comprises the steps of dropping a reagent onto an impregnation film 4 such as a filter paper, a cellulose acetate film or the like, using for example, a pipet; having the impregnation film 4 absorb the reagent as shown in Fig. 3; and attaching the impregnation film 4 which has absorbed the reagent closely to the support member 2 which has been electrophoresed so that the reagent is supplied to the support member 2 as shown in Figs. 4 and 5.

However, the procedure of dropping the reagent onto the entire surface of the support member shown in Figs. 1 and 2 above has a problem that there is a difficulty in making the support member absorb a fixed amount of reagent with reliable reproducibility of results. Such manipulation requires skill, resulting in inefficiency. There is a further problem associated with the above procedure that when the excessive reagent on the support member is removed, the sample tends to wash away out of the support member, causing frequent occurrence of an assay failure due to a blurring of a pattern after reaction or overlapping of a pattern with an adjacent pattern.

In the meantime, the procedure of attaching the impregnation film which has absorbed the reagent closely to the support member as shown in Figs. 3 to 5 has a problem that there is difficulty in making the support member absorb the reagent from the impregnation film with high reproducibility, involving complicated manipulation. Further, in some cases, resultant substance produced in the substratum is transferred to the impregnation film after reaction, resulting in degradation of sharpness of a pattern.

An object of the present invention is to provide a thin layer reagent supplier for diffusing a proper amount of the reagent for electrophoresis and dissolving into the electrophoresed sample at an instant.

Another object of the present invention is to provide a method for diffusing a proper amount of the reagent for electrophoresis and dissolving into the electrophoresed sample at an instant.

In the first aspect of the present invention, a thin layer reagent supplier for electrophoresis which is capable of uniformly suppling reagent for electrophoresis to a support member thin film formed of a material composed of cellulose acetate, agarose, agar, polyacrylamide gel, starch or the like in a manner that said thin layer reagent supplier is closely attached to the support member thin film after coated with a sample and electrophoresed, the thin layer reagent supplier for electrophoresis is characterized in that:

an impregnant containing the reagent formed of a mixture of at least the reagent for electrophoresis and a binder is uniformly attached to a thin layer substratum.

Here, the film thickness of the impregnant containing the reagent after drying may be thinner than that of the support member thin film.

The reagent content in the impregnant containing the reagent may be proportionate to a water content in the support member after it is electrophoresed.

The binder may be gelatin or polyvinylalcohol.

The thin layer substratum may be a polyester film.

A cover may be capable of being opened or closed to a side of the thin layer substratum surface which is coated with the impregnant containing the reagent.

In the second aspect of the present invention, a method for supplying reagent for electrophoresis which is capable of uniformly supplying reagent for electrophoresis to a support member thin film formed of a material composed of cellulose acetate, agarose, agar, polyacrylamide gel, starch or the like in a manner that the thin layer reagent supplier is closely attached to the support member thin film after coated with a sample and electrophoresed, the thin layer reagent supplier for electrophoresis comprises the steps of:

forming an impregnant containing the reagent from a mixture of at least the reagent for electrophoresis and a binder;

applying the impregnant containing the reagent uniformly to a thin layer substratum to form a thin layer reagent supplier for electrophoresis;

attaching the thin layer reagent supplier to the support member thin film to supply the reagent into the support member thin film.

Here, a reagent content in the impregnant containing the reagent may be made proportional to a water content in the support member after it is electrophoresed.

The above and other objects, effects, features and advantages of the present invention will become more apparent from the following description of embodiments thereof taken in conjunction with the accompanying drawings.

Figs. 1 and 2, and Figs. 3, 4 and 5 are respective perspective views explaining a procedure for supplying reagent to a support member after it is electrophoresed; and

Fig. 6 is a perspective view showing a thin layer reagent supplier for electrophoresis according to one embodiment of the present invention.

A thin layer reagent supplier for electrophoresis according to the present invention is characterized in that an impregnant containing a reagent composed of a mixture including at least a reagent for the electrophoresis and a binder is uniformly attached to a thin layer substratum.

In a method for supplying reagent for electrophoresis according to the present invention, the thin layer reagent suppliers having the above-described structure is closely attached to the support member thin film after electrophoresed to thereby permit the reagent for electrophoresis to be uniformly supplied to the supported member thin film.

Water-soluble adhesive is preferred as a binder in this case. Examples of the water-soluble adhesive are polyvinylalcohol, gelatin and starch, especially polyvinylalcohol is preferably used as the binder, but the binder is not limited to these water-soluble adhesives.

Examples of known reagents which are also used as the reagent described above are a LDH (lactate dehydrogenase) isoenzyme reagent, a CK (creatinekinase) isoenzyme reagent, an alkaline-phosphatase isoenzyme reagent, an amylase isoenzyme reagent, a cholesterol fraction reagent, a LAP (leucine amino peptidase) isoenzyme reagent, a $\gamma$ GTP ($\gamma$ glutamine transpeptidase) isoenzyme reagent, a cholinesterase isoenzyme reagent, an enolase isoenzyme reagent or the like.

The thin layer substratum material is a polyester film in most cases. Alternatively, the thin layer substratum may be selected from thin film materials of other quality or may be a laminate film.

When the present invention is to be utilized, it is of importance to adjust the concentration of the reagent contained in the impregnant containing the reagent in proportion to the water content in the support member to which the reagent is supplied.

When the reagent supplier of the present invention is closely attached to the support member after electrophoresed, almost all the amount of the reagent is transferred to the support member. An amount of residual reagent in the reagent supplier after closely attached to support member is negligible in comparison with the amount of the reagent transferred to the support member. Consequently, it is sufficient to merely mix the reagent into the impregnant containing the reagent to an extent such that an amount of the reagent is sufficient enough to make the concentration of the reagent in the support member necessary for dyeing in proportion to the water content of the support member.

In accordance with the procedure set forth above, the reagent supplier of the present invention is capable of supplying the reagent to the entire support member in a proper amount, thus eliminating the problem associated with removing the residual reagent in the surface of the support member.

As has been described above, the present invention is characterized in that the reagent content is set such as to be dissolved with the water content in the support member after electrophoresed; and such amount of the reagent is formed into a thin layer by using a binder; and the thin layer thus prepared is closely attached to the support member so that the proper amount of the reagent diffuses and is dissolved in the support member at an instant.

Consequently, the present invention dispenses with a removing manipulation of excessive reagent on the surface of the support member so that a sample is prevented from washing away, preventing occurrence of resultant substance being transferred to the reagent side as often happens in the case where a filter is used to supply a reagent. Further, when reaction takes place, the thin layer substratum of the thin layer reagent supplier is in a coated condition so that water in the support member is prevented from evaporation, and a fixed amount of the reagent is developed with excellent reproducibility of results, leading to remarkable improvement in reproducibility of assay data, and providing a procedure which does not involve any specific technique. Further, it is advantageous that manipulation is simplified because the present invention dispenses with the need for making the reagent dissolved prior to its use.

Now, one embodiment of the present invention will be described hereinunder. In the present embodiments 1, 2, 3, the present invention is applied to a LDH isoenzyme reagent used in the LDH isoenzyme method.

<u>Preferred composition of the impregnant containing the reagent (LDH isoenzyme reagent) for the thin layer reagent using in the embodiments 1, 2, 3</u>

```
DL lithium lactate ..... 50 to 500 mM
NAD                  ..... 2 to 20 mM
diaphorase           ..... 2000 to 20000 U/liter
MTT                  ..... 1 to 6 mM
NTB                  ..... 0.2 to 2 mM
gelatin              ..... 2 to 10 %
```

In the above composition,

|       |                                                            |
|-------|------------------------------------------------------------|
| NAD;  | nicotinamide adenine dinucleotide                          |
| MTT;  | 3- (4, 5-dimethyl-2-thiazolyl-2, 5-diphenyl-2H tetrazoliumbromide |
| NTB;  | nitrotetrazolium blue                                      |

First, gelatin of 50g was mixed into 1 liter of distilled water while stirring well (for 5 minutes). After gelatin swelled, it was warmed in a water bath at the temperature of 70°C to be melted thoroughly (5wt%).

After gelatin was melted thoroughly in this manner, then, it was cooled down to 30°C. After lithium lactate, NAD, diaphorase, MTT, and NTB were so weighed as to make concentration necessary for a support member used for electrophoresis and were added into the 1 liter gelatin solvent thus prepared (as shown in the following three examples). Then, they were melted thoroughly in the solvent while excluding light.

| Example 1 | |
|---|---|
| Lithium lactate | 120 mM |
| NAD | 5 mM |
| diaphorase | 6000 U/liter |
| MTT | 2 mM |
| NTB | 0.6 mM |

| Example 2 | |
|---|---|
| Lithium lactate | 240 mM |
| NAD | 10 mM |
| diaphorase | 12000 U/liter |
| MTT | 4 mM |
| NTB | 1.2 mM |

| Example 3 | |
|---|---|
| Lithium lactate | 480 mM |
| NAD | 20 mM |
| diaphorase | 20000 U/liter |
| MTT | 4 mM |
| NTB | 1.2 mM |

Then, three reagent solutions according to the embodiments 4, 5, 6 were prepared. In these embodiments 4, 5, 6, the present invention is applied to a cholesterol fraction reagent used in the cholesterol fraction method.

| Preferred composition of the impregnant containing the reagent (cholesterol fraction reagent) for the thin layer reagent using in the embodiments 4, 5, 6 | |
|---|---|
| Cholesterol dehydroquininase | 4000 to 15000 u/liter |
| cholesterol esterase | 6000 to 20000 u/liter |
| diaphorase | 3000 to 150000 u/liter |
| NAD | 5 to 20 mM |
| MTT | 2.5 to 10 mM |
| PVA (polyvinylalcohol) | 2 to 5 % |

First, PVA was added into 500 mℓ of distilled water to obtain twofold concentration of desired concentration of PVA solution (for example, in the embodiment 4, the desired concentration is 4 %, then the twofold concentration is 8 %) while stirring well. The mixture was warmed in a water bath to be melted thoroughly. Then, MTT was dissolved into the above-obtained PVA solution of 500 mℓ to obtain twofold concentration of desired concentration of MTT dissolved solution.

On the other hand, after cholesterol dehydroquininase, cholesterol esterase, diaphorase, and NAD were dissolved into 500 mℓ of distilled water to obtain twofold concentration of desired concentration of solution containing above components.

Above two solutions were mixed to obtain the reagent solution of 1 ℓ of which concentration were necessary for a support member used for electrophoresis (as shown in the following three examples). All dissolving processes described above were made while excluding light.

| Example 4 | |
|---|---|
| Cholesterol dehydroquininase | 7400 u/liter |
| cholesterol esterase | 9800 u/liter |
| diaphorase | 6000 u/liter |
| NAD | 8.8 mM |
| MTT | 4.6 mM |
| PVA (polyvinylalcohol) | 4 % |

| Example 5 | |
|---|---|
| Cholesterol dehydroquininase | 11000 u/liter |
| cholesterol esterase | 14700 u/liter |
| diaphorase | 90000 u/liter |
| NAD | 13.2 mM |
| MTT | 6.9 mM |
| PVA (polyvinylalcohol) | 3 % |

| Example 6 | |
| --- | --- |
| Cholesterol dehydroquininase | 14800 u/liter |
| cholesterol esterase | 19600 u/liter |
| diaphorase | 120000 u/liter |
| NAD | 17.6 mM |
| MTT | 9.2 mM |
| PVA (polyvinylalcohol) | 2 % |

A (roll of) polyester film in the thickness of 50 $\mu$m used as a thin layer substratum is (continuously) coated with each of the reagent solvents having the compositions in examples 1 to 6 as shown above in the thickness of 50 $\mu$m using a well known coating device so that the thickness of coated film is made thinner than that of a corresponding one of the substrata (a cellulose acetate film after dried in the thickness of 100 to 200 $\mu$m). Thereafter, the coated film was dried with an accessory drying device.

The thickness of the coating formed of the reagent solvent is made thinner than that of the support member because when the thin layer reagent supplier of the present invention is closely attached to the substratum, the possibility of resultant substance in the support member being transferring to the thin layer reagent is increased if the thin layer reagent supplier is thicker than the support member.

The thickness of the coating of the reagent solvent each can be adjusted by adjusting gelatin concentration, the temperature of and a coating speed of the reagent solvent.

On the thin layer reagent supplier thus prepared, stop marks are printed by a printer at intervals so that each interval corresponds to a length as required each time. The supplier is cut into some rolls to be used for predetermined times or alternatively, may be cut in leaflets each of which is to be used each time, by a cutting device having a detector.

As shown in Fig. 6, when the supplier is to be used in the form of a leaflet, the impregnant 11 containing the reagent is attached to the thin layer substratum 10 then, dried to form the thin layer reagent supplier, and the supplier thus prepared is cut into leaflets. Thereafter, a cover 12 (formed of a polyester film in the thickness of 38 $\mu$m, for example) is fixed on a coated side of the thin layer reagent supplier by heat sealing one side 12a of the cover thereon. At this step, it is desirable that the cover 12 is placed to slip out of place to some extent with respect to the substratum 10 so that the cover 12 is easily turned over.

The provision of the cover 12 can prevent the drying of the impregnant 11 containing the reagent as well as contamination of its surface. The impregnant 11 can be attached to the support member for supplying the reagent thereto with increased closeness than has been attained hithertofore and further, devices installed in its surroundings are not contaminated in attaching the impregnant 11 closely to the support member as will be explained hereinunder.

An arrangement for fixing the cover 12 as described above is suitable mainly for the case where the thin layer reagent supplier is used within a short time after it is manufactured. In the case that thin layer reagent supplier is to be used after a long lapse of time after it is manufactured, the entire circumference or all the sides of the cover must be heat sealed in order to protect the surface of the reagent against invasion and attachment of particles of dust as well as to protect it from being excessively dried. The thin layer reagent supplier having the structure described above is used by cutting off its sealed portions except one side immediately before it is used, using an automatic cutter of the like as shown in Fig. 6.

In Fig. 6, reference numeral 13 denotes a stop mark. When the thin layer reagent supplier having the structure as described above is used, it is carried toward the electrophoresed support member manually or by an automatic machine. Then, its cover 12 is turned over, and is put down while keeping the impregnant 11 containing the reagent in a facing and contacting relation with the support member. Thereafter, the support member is lightly pressed by a roller or the like in a sandwiched condition between the substratum 10 and the cover 12 or the like so that the impregnant 11 containing the reagent closely adheres to the support member. Concurrently upon such adhesion, the reagent contained in the impregnant 11 diffuses and is dissolved into the entire support member. An amount of the reagent contained in the impregnant containing the reagent is determined in proportion to an amount of water in the support member so that the reagent is transferred in a necessary and sufficient manner, and thus, there is no residue of excessive reagent in the surface of the support member.

At the step in which the reagent is transferred, even if the reagent concentration is known, the conventional method is not capable of finding concentration which participates in reaction in relation with the reagent concentration absorbed by the electrophoresed support member, due to factors of a degree of absorption and dilution. In the meantime, in accordance with the present invention, it is easy to find concentration supplied to the support member. For example, when the reagent shown in Example 1 is

EP 0 484 864 A2

applied to a TITAN III cellulose acetate film (manufactured by Helena Laboratories; Size: 76 × 60 mm), reagent concentration supplied to the support member can be found by performing calculation as follows: That is, water content retained in a cellulose acetate film is 700 $\mu\ell$. An amount of reagent which is coated on the cellulose acetate film of the above size is 228 $\mu\ell$ as calculated on the basis of the area and a thickness of 50 $\mu$m of the cellulose acetate film. The reagent thus coated is dried and is dissolved in the water content of 700 $\mu\ell$. Accordingly, the concentration is reduced to 1/3 concentration approximately. Thus, the reagent concentration is as follows:

```
Lithium lactate:   40 mM          NAD:     1.7 mM
diaphorase:        20000 U/liter  MTT:     0.7 mM
NTB:               0.2 mM
```

After reaction as described above is completed, the thin layer reagent is torn off the support member. A fraction pattern on the support member is assayed.

Thin layer reagents for electrophoresis in Examples 1 to 3 were respectively closely attached and supplied to corresponding substrata in accordance with the procedure described above. The results were that excellent fractions appeared on respective substrata.

The above explanations relate to embodiments which used an LDH isoenzyme as a reagent but the present invention is not limited to the application of this isoenzyme. Other known reagents which may be also used include a CK isoenzyme reagent, an alkaliphosphatase isoenzyme reagent, an amylase isoenzyme reagent, a LAP isoenzyme reagent, a $\gamma$ GTP isoenzyme reagent, a cholinesterase isoenzyme reagent, an enolase isoenzyme reagent or the like.

The present invention has been described in detail with respect to preferred embodiments, and it will now be apparent from the foregoing to those skilled in the art that changes and modifications may be made without departing from the invention in its broader aspects, and it is the intention, therefore, in the appended claims to cover all such changes and modifications as fall within the true spirit of the invention.

## Claims

1. A thin layer reagent supplier for electrophoresis which is capable of uniformly suppling reagent for electrophoresis to a support member thin film formed of a material composed of cellulose acetate, agarose, agar, polyacrylamide gel, starch or the like in a manner that said thin layer reagent supplier is closely attached to said support member thin film after coated with a sample and electrophoresed, said thin layer reagent supplier for electrophoresis is characterized in that:
   an impregnant containing said reagent formed of a mixture of at least said reagent for electrophoresis and a binder is uniformly attached to a thin layer substratum.

2. The thin layer reagent supplier for electrophoresis as claimed in claim 1, characterized in that a film thickness of said impregnant containing said reagent after dried is thinner than that of said support member thin film.

3. The thin layer reagent supplier for electrophoresis as claimed in claim 1 or 2, characterized in that a reagent content in said impregnant containing said reagent is proportionate to a water content in said support member after electrophoresed.

4. The thin layer reagent supplier for electrophoresis as claimed in any of claims 1 to 3, characterized in that said binder is gelatin.

5. The thin layer reagent supplier for electrophoresis as claimed in any of claims 1 to 4, characterized in that said binder is polyvinylalcohol.

6. The thin layer reagent supplier for electrophoresis as claimed in any of claims 1 to 5, characterized in that said thin layer substratum is a polyester film.

7

**7.** The thin layer reagent supplier for electrophoresis as claimed in any of claims 1 to 6, characterized in that a cover is capable of being opened or closed to a side of said thin layer substratum surface which is coated with said impregnant containing said reagent.

**8.** A method for supplying reagent for electrophoresis which is capable of uniformly supplying reagent for electrophoresis to a support member thin film formed of a material composed of cellulose acetate, agarose, agar, polyacrylamide gel, starch or the like in a manner that said thin layer reagent supplier is closely attached to said support member thin film after coated with a sample and electrophoresed, said thin layer reagent supplier for electrophoresis comprising the steps of:

forming an impregnant containing said reagent from a mixture of at least said reagent for electrophoresis and a binder;

applying said impregnant containing said reagent uniformly to a thin layer substratum to form a thin layer reagent supplier for electrophoresis;

attaching said thin layer reagent supplier to said support member thin film to supply said reagent into said support member thin film.

**9.** The method for supplying reagent for electrophoresis as claimed in claim 8, characterized in that a reagent content in said impregnant containing said reagent is made proportional to a water content in said support member after electrophoresed.

FIG. 1

FIG. 2

FIG. 6

FIG.3

FIG.4

FIG.5